# EUROPÄISCHE PATENTSCHRIFT

(11) **EP 2 998 159 B1**
(45) Veröffentlichungstag und Bekanntmachung des Hinweises auf die Patenterteilung: **27.03.2019**
(21) Anmeldenummer: 15002520.3
(22) Anmeldetag: 25.08.2015
(51) Int. Cl.: B60P 3/22

(54) **TANKWAGEN-ANHÄNGER FÜR FLÜSSIGKEITEN**
TANK CARRIAGE TRAILER FOR LIQUIDS
ATTELAGE DE CAMION CITERNE POUR LIQUIDES

(30) Priorität: 22.09.2014 DE 202014007788 U
(43) Veröffentlichungstag der Anmeldung: 23.03.2016
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- EP-A2- 2 712 789
- FR-A- 1 445 694
- GB-A- 152 637
- US-A- 3 163 435
- US-A- 3 627 340

## Beschreibung

Die Erfindung betrifft einen Tankwagen-Anhänger für Flüssigkeiten.

Tankwagen-Anhänger weisen gemäß dem Stand der Technik einen Fahrgestellrahmen auf. Der Rahmen ist die zentrale tragende Baugruppe des Fahrgestells, an der sowohl Baugruppen des Fahrwerks, die Achsen etc., wie auch die Tankkonstruktion befestigt sind. Im Nutzfahrzeugbau werden üblicherweise, insbesondere für Lastkraftwagen, Anhänger und Auflieger, volltragende steife Fahrgestellrahmen mit hohem Eigengewicht verwendet. Für die Zulassung im Straßenverkehr gelten oft Höchstgrenzen für das Gesamtgewicht eines Zuges, d.h. eines Zugfahrzeugs nebst Anhänger, wie auch für die einzelnen Achslasten. Bei sehr schweren auf dem Tankwagen-Anhänger montierten Lasten, wie etwa einem befüllten Güllefass, ist dieses Gewicht schnell erreicht.

Aus der EP 2 712 789 A2 ist bekannt, den Stand der Technik hinsichtlich der Gewichtsoptimierung auf der einen Seite und der ausreichenden Steifigkeit auf der anderen Seite weiterzubilden. Gemäß der Lehre der Druckschrift umfasst der Anhänger ein Chassis (Rahmen), eine mit dem Chassis verbundene Deichsel und einen durch das Chassis getragenen Tank zur Aufnahme der Flüssigkeit. Das Chassis weist lediglich einen Längsträger auf, der mittig angeordnet ist.

Der Längsträger erstreckt sich bezüglich der Fahrtrichtung in Längsrichtung. Insbesondere ist die Mitte im Chassis so definiert, dass der Längsträger mit dem Anbindungspunkt an der Zugmaschine fluchtet. Dabei muss für eine leichte und gleichzeitig betriebssichere Bauweise des Chassis nicht zwangsläufig die gesamte Rahmenkonstruktion versteift ausgebildet werden.

Aus der FR 1 445 694 A ist ein Kunststofftank, mit einer Innen- und einer Außenwand aus Kunststoffmaterial bekannt, wobei zwischen den beiden Wänden ein starres Kernmaterial, beispielsweise in Form eines Profilteils eingearbeitet ist. An den beiden Profilteilen sind Tragplatten mit Schrauben über eine Platte befestigt. Die Profilteile bzw. Längsträger dienen zur Stabilisierung und Formsteifigkeit, und erstrecken sich parallel entlang der gesamten Unterseite der Tanks.

Aus der US 3 163 435 A ist ein Transportkessel bekannt, der aus einem leichtgewichtigen Außengehäuse und einem innen liegenden Behälter besteht, der von dem Außengehäuse einen Abstand hat. Insbesondere besteht der innenliegende Behälter aus rostfreiem Stahl. Über einen Sattel ist ein Königszapfen, ein Radgestell und ein hinteres Fahrwerk miteinander verbrückt. Das Fahrwerk ist mittelbar über ein Verstärkungsbauteil an der Tankkonstruktion befestigt.

Ausgehend von dem bekannten Stand der Technik liegt der vorliegenden Erfindung die Aufgabe zugrunde, einen Tankwagen-Anhänger für Flüssigkeiten anzugeben, der weitergehend gewichtsoptimiert ausgebildet ist, gleichzeitig aber die für Straßen- wie auch für Geländefahrten nötige Stabilität aufweist. Weiterhin soll der anzugebende Tankwagen-Anhänger einfach herzustellen und zu montieren sein.

Die vorstehend angegebene Aufgabe wird von einem Tankwagen-Anhänger gemäß Anspruch 1 gelöst. Vorteilhafte Ausführungsformen der Erfindung sind Gegenstand der abhängigen Ansprüche und werden unter teilweiser Bezugnahme auf die Figuren in der folgenden Beschreibung näher erläutert.

Die vorliegende Erfindung wendet sich damit ab vom Stand der Technik, der durch die Reduzierung des Chassismaterials eine Gewichtsoptimierung zu erreichen sucht. Erfindungsgemäß ist ein Chassis bzw. ein Rahmen vollständig entbehrlich, indem die Tankkonstruktion gezielt so verstärkt wird, dass diese selbsttragend ist. Im Rahmen dieser Erfindung wird unter einer selbsttragend Tankkonstruktion eine Tankkonstruktion verstanden, die eine ausreichende Festigkeit aufweist, um auf ein Fahrgestellrahmen, ein Chassis oder einen Längsträger verzichten zu können. Die Achsen sind dabei unverbrückt unmittelbar an der Tankkonstruktion befestigt. Unverbrückt bedeutet, dass zumindest zwischen der Vorder- und der zumindest einen Hinterachse keine Verbindung in Form eines Trägers, Rahmens oder Chassis besteht.

Der erfindungsgemäße Tankwagen-Anhänger für Flüssigkeiten umfasst eine Tanckonstruktion aus Faser-Kunststoff-Verbundwerkstoffen, vorzugsweise aus CFK (kohlenstofffaserverstärktem Kunststoff), aus GFK (glasfaserverstärktem Kunststoff) oder einer Mischung der vorstehend genannten Komponenten. Als Kunststoffe kommen insbesondere Polyester- oder Epoxidharze oder Polyamide zum Einsatz.

Die Herstellung der Tankkonstruktion erfolgt bevorzugt nach dem sog. Handlaminierverfahren. Zunächst werden eine Ober- und eine Unterschale hergestellt, die dann miteinander verbunden werden. Die Fadenhalbzeuge werden zumeist als Rovings, Matten oder Gewebe abgelegt und von Hand mit einem geeigneten Werkzeug getränkt. Die anfangs in dünnflüssiger Form vorliegenden Matrixwerkstoffe, insbesondere duroplastische Kunststoffe, ermöglichen aufgrund ihrer geringen Viskosität eine sehr gute Benetzung der Fasern. Faserablage und Benetzung der Fasern mit dem Matrixwerkstoff erfolgen hier gleichzeitig mit dem Formgebungsverfahren in einer Form. Nach anschließender Aushärtung der Matrix können die Bauteile entformt und gegebenenfalls nachbearbeitet werden.

Erfindungsgemäß weist die Tankkonstruktion, bevorzugt die Unterschale, abschnittsweise verstärkte Bereiche auf. Vorzugsweise sind in diesen Bereichen die Achsen befestigt. Die Verstärkung dieser Bereiche kann beispielsweise durch an- oder einlaminieren eines vorgefertigten Faser-Kunststoff-Verbundwerkstoffteils oder eines anderen geeigneten vorgefertigten Materialteils, beispielsweise eines Stahlteils, insbesondere eines Edelstahlteils, erfolgen. Die mechanischen Eigenschaften von Faser-Kunststoff-Verbundwerkstoffen können über eine Vielzahl von Parametern eingestellt werden. Neben der Faser-Matrix-Kombination können beispielsweise der Faserwinkel, der Faservolumenanteil, die Schichtreihenfolge und vieles mehr variiert werden. Demgemäß ist die Art, Größe und Tiefe (Dicke) der verstärkten Bereiche vom Fachmann in Abhängigkeit des Tankvolumens, der Tanklänge, der Anzahl der Achsen des Tankwagen-Anhänger und gegebenenfalls weiterer Parameter zu wählen.

Neben einer Materialverstärkung können in den abschnittsweise verstärkten Bereichen auch Gegenflansche einlaminiert sein. Im einfachsten Fall ist dies eine Schraube mit einer Beilagscheibe. Bevorzugt werden jedoch Profilschienen bzw. Profilkränze einlaminiert.

Ein erfindungsgemäßer Tankwagen-Anhänger für Flüssigkeiten umfasst in einer ersten Ausführungsform eine Achse, insbesondere eine Starrachse, mit wenigstens einem im wesentlichen quer zur Anhängerlängsachse verlaufenden Achsträger, der ein Profil aufweist, das bevorzugt biegesteif und torsionsweich ausgeführt ist, und an dessen Enden weitere Achsteile befestigt sind, die jeweils mindestens ein Anhängerrad führen, und wenigstens einem im wesentlichen längs zur Anhängerlängsachse verlaufenden Achsschlitten, der vorzugsweise ein Profil aufweist, an dessen Fläche die Tankkonstruktion befestigt ist. Ein bevorzugtes Profil ist ein L-Profil, insbesondere zwei L-Profile, die unmittelbar an der Außenseite der Tankkonstruktion befestigt sind. Dies hat den Vorteil, dass die wannenförmige Unterschale sowohl an der Unterseite wie auch den Seitenflächen fixiert werden kann. Vorzugsweise sind in der Tankkonstruktion ebenfalls zwei als L-Profil ausgebildete Gegenflansche vorgesehen. Um eine höhere Festigkeit der Tankkonstruktion zu erzielen und einen Fixpunkt für die Befestigung der Außenprofile vorzusehen sind die L-Profile im Tankinneren, bevorzugt ein- oder anlaminiert.

Im vorderen Abschnitt der Tankkonstruktion ist zumindest eine Anhängevorrichtung, insbesondere ein Königszapfen, ausgebildet. Der Zapfen selbst ist an einer scheibenförmigen Aufnahme ausgebildet. Die Aufnahme kann ein- oder zweiteilig ausgeführt sein In der einteiligen Ausführungsform ist die Aufnahme bereits ganz oder teilweise in der Unterschale der Tankkonstruktion einlaminiert. Bevorzugt ist die Aufnahme jedoch zweiteilig ausgeführt, wobei der erste Teil an der Außenseite der Tankkonstruktion und der zweite Teil als Gegenflansch im Tankinneren vorgesehen ist. Die beiden Teile werden beispielsweise verschraubt, wobei der zweite Teil bevorzugt einlaminiert ist. Erfindungsgemäß sind Achse und Anhängevorrichtung, insbesondere der Königszapfen, unverbrückt unmittelbar an der Tankkonstruktion befestigt.

Eine zweite Ausführungsform des erfindungsgemäßen Tankwagen-Anhängers für Flüssigkeiten umfasst neben der vorstehend beschriebenen Starrachse eine weitere, drehbare Achse, vorzugsweise eine Drehschemelachse, mit wenigstens einem im wesentlichen quer zur Anhängerlängsachse verlaufenden Achsträger, der ein Profil aufweist an dessen Enden weitere Achsteile befestigt sind, die jeweils mindestens ein Anhängerrad führen, einem Drehgestell mit einer Zuggabel und einem von einem Ober- und einem Unterring gebildeten Lenkkranz, wobei zumindest der Oberring an der Außenseite der Tankkonstruktion befestigt ist. Der Oberring kann ganz oder teilweise einlaminiert sein. Vorzugsweise ist der Oberring über einen, im Tankinneren, bevorzugt ringförmig ausgebildeten Gegenflansch, beispielsweise mittels einer oder mehrerer Schraubverbindungen an der Außenseite der Tankkonstruktion befestigt. Der Gegenflansch kann in der Unterschale des Tanks an- oder einlaminiert sein. Die hat den Vorteil, dass hierdurch eine erhöhte Festigkeit der Tankkonstruktion erzielbar ist. Erfindungsgemäß sind die Achsen unverbrückt über die Profile bzw, über den Oberring unmittelbar am Tank befestigt.

Daraus, dass die Form der Tankkonstruktion nicht länger an einen Träger, einen Rahmen oder ein Chassis angepasst werden muss resultieren eine Vielzahl von Vorteilen. So kann Bauraum eingespart, und die Fahrzeughöhe reduziert werden. Ein tieferer Schwerpunkt und eine niedrigere Bauweise wirken sich wiederum vorteilhaft auf das Fahrverhalten des Tankwagen-Anhängers aus. Zudem kann die Tankkonstruktion so ausgeführt sein, dass eine restlose Entleerung möglich ist. Auch hat der erfindungsgemäße Tankwagen-Anhänger eine hohe Nutzlast bei geringem Eigengewicht, wodurch er sich besonders für den Transport von schweren Lasten, insbesondere von Gülle, eignet.

Im Folgenden wird die Erfindung ohne Beschränkung des allgemeinen Erfindungsgedankens unter Bezugnahme auf die Figuren näher erläutert. Es zeigen:
- Fig. 1: eine perspektivische Ansicht eines Tankwagen-Anhängers für Flüssigkeiten,
- Fig. 2: eine Starrachse und eine drehbare Achse,
- Fig. 3: eine perspektivische Ansicht der Unterschale eines Tankwagen-Anhängers für Flüssigkeiten,
- Fig. 4: eine Detailansicht eines L-Profils als Gegenflansch
- Fig. 5: eine weitere perspektivische Ansicht der Unterschale eines Tankwagen-Anhängers für Flüssigkeiten,
- Fig. 6: eine Detailansicht eines ringförmigen Gegeriflansches,
- Fig. 7: eine seitliche Ansicht eines Tankwagen-Anhängers für Flüssigkeiten und
- Fig. 8: eine Frontalansicht eines Tankwagen-Anhängers für Flüssigkeiten.

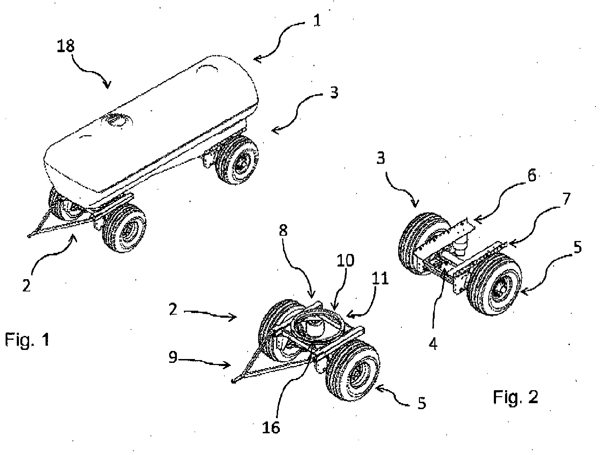

Figur 1 zeigt eine perspektivische Ansicht eines Tankwagen-Anhängers für Flüssigkeiten 1 mit einer erfindungsgemäß, selbsttragenden Tankkonstruktion 18 mit unverbrückten Achsen, nämlich einer drehbaren Vorderachse 2 und eine hinteren Starrachse 3. Neben einem derartigen Tandem-Anhänger mit zwei Achsen ist es natürlich auch möglich einen erfindungsgemäßen Tridem-Anhänger mit drei Achsen, beispielsweise mit zwei Starrachsen und einer drehbaren Achse bereitzustellen.

In Figur 2 sind eine Starrachse 3 und eine drehbare Achse 2 dargestellt, die unverbrückt unmittelbar an der Tankkonstruktion 18 befestigt werden. Die Starrachse 3 weist einen im wesentlichen quer zur Anhängerlängsachse verlaufenden Achsträger 4 auf, der wiederum ein Profil aufweist, das biegesteif und torsionsweich ausgeführt ist, und an dessen Enden weitere Achsteile befestigt sind, die jeweils ein Anhängerrad 5 führen. Daneben sind im Wesentlichen zwei längs zur Anhängerlängsachse verlaufende Achsschlitten 6, 7 dargestellt die ein L-Profil aufweisen an dessen Flächen die Tankkonstruktion befestigt wird.

Die vordere drehbare Achse 2 weist einen im Wesentlichen quer zur Anhängerlängsachse verlaufenden Achsträger auf, der wiederum ein Profil aufweist an dessen Enden weitere Achsteile befestigt sind, die jeweils ein Anhängerrad 5 führen. Daneben ist ein Drehgestell 8 mit einer Zuggabel 9 und ein von einem Ober- und einem Unterring 10, 11 gebildeter Lenkkranz 16 dargestellt. Der Oberring 10 wird unmittelbar an der Tankkonstruktion 18 befestigt.

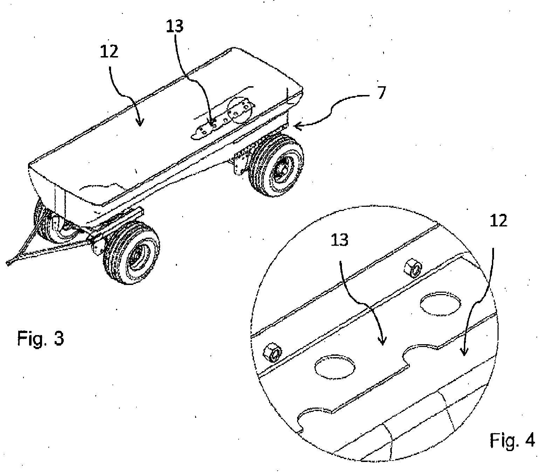

Figur 3 zeigt eine perspektivische Ansicht der Unterschale 12 eines Tankwagen-Anhängers 1 für Flüssigkeiten, und die Detailansicht in Figur 4 die Befestigung des als L-Profil ausgeführten Gegenflansches 13 im Tankinneren. Die Profil-Paare 6 und 13 sowie 7 und 14 (nicht in der Figur dargestellt) sind verschraubt und verfügen über geeignete Dichtmittel.

In der Figur 4 sind zwei Schrauben an der Seitenfläche der Unterschale 12 gezeigt, wobei es gegebenenfalls vorteilhaft sein kann, mehrere Schraubverbindungen sowohl an der Seitenfläche wie auch an der wannenförmigen Unterseite der Unterschale 12 vorzusehen.

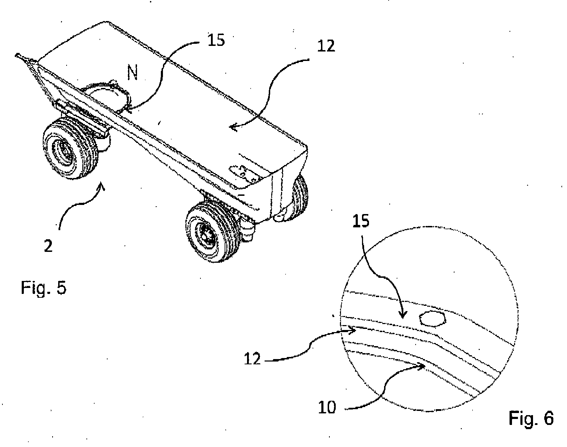

Figur 5 zeigt eine weitere perspektivische Ansicht der Unterschale 12 eines Tankwagen-Anhängers 1 für Flüssigkeiten, und die Detailansicht in Figur 6 die Befestigung des Oberrings 10 über den ringförmig ausgeführten Gegenflansch 15 im Tankinneren. Zwischen dem Oberring 10 und dem Gegenflansch 15 befindet sich die Unterschale 12. Die beiden Ringe 10, 15 sind vorzugsweise verschraubt und verfügen über geeignete Dichtmittel. Die ringförmig, wie auch die L-profilförmig ausgebildeten im Tankinneren angeordneten Gegenflansche 13, 14, 15 können in der Tankkonstruktion an- oder einlaminiert sein.

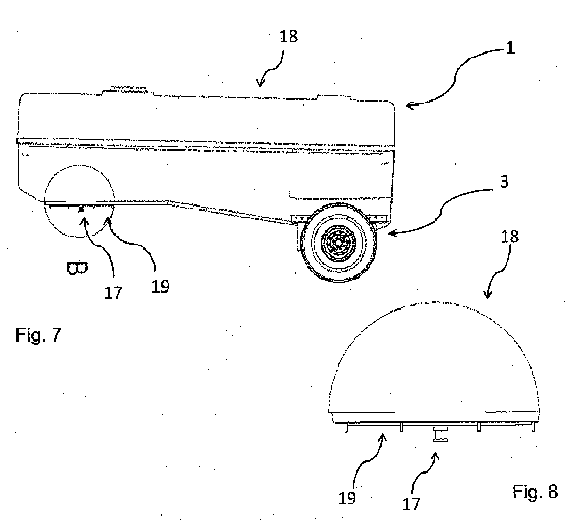

In Figur 7 und 8 ist eine weitere Ausführungsform eines Tankwagen-Anhängers 1 für Flüssigkeiten dargestellt. Gemäß der Figuren weist der Tankwagen-Anhänger 1 eine Starrachse 3 und im vorderen Abschnitt der Tankkonstruktion 18 einen Königszapfen 17 auf. Der Zapfen 17 selbst ist an einer scheibenförmigen Aufnahme 19 ausgebildet. Die Aufnahme 19 kann ein- oder zweiteilig ausgeführt sein. In der einteiligen Ausführungsform ist die Aufnahme 19 bereits ganz oder teilweise in der Unterschale 12 der Tankkonstruktion 18 einlaminiert. In der zweiteiligen Ausführungsform der Aufnahme 19 ist der zweite Teil als Gegenflansch im Tankinneren vorgesehen. Die beiden Teile werden verschraubt, wobei der zweite Teil ein- oder anlaminiert ist.

### Bezugszeichenliste:

- 1: Tankwagen-Anhänger für Flüssigkeiten
- 2: drehbaren Vorderachse
- 3: Starrachse
- 4: Achsträger
- 5: Anhängerrad
- 6: Achsschlitten
- 7: Achsschlitten
- 8: Drehgestell
- 9: Zuggabel
- 10: Oberring
- 11: Unterring
- 12: Unterschale
- 13: Gegenflansch
- 14: Gegenflansch (nicht in der Figur dargestellt)
- 15: Gegenflansch
- 16: Lenkkranz
- 17: Königszapfen
- 18: Tankkonstruktion
- 19: scheibenförmige Aufnahme

## Patentansprüche

1. Tankwagen-Anhänger (1) für Flüssigkeiten, umfassend eine selbsttragende Tankkonstruktion (18) aus Faser-Kunststoff-Verbundwerkstoffen mit abschnittsweise verstärkten Bereichen, zumindest eine Starrachse (3) mit wenigstens einem im wesentlichen quer zur Anhängerlängsachse verlaufenden Achsträger (4), der ein Profil aufweist, und an dessen Enden weitere Achsteile befestigt sind, die jeweils mindestens ein Anhängerrad (5) führen und wenigstens einem im wesentlichen längs zur Anhängerlängsachse verlaufenden Achsschlitten (6, 7), zumindest eine Anhängevorrichtung, insbesondere ein Königszapfen (17), oder eine weitere Achse (2), die drehbar ist, mit wenigstens einem im wesentlichen quer zur Anhängerlängsachse verlaufenden Achsträger, der ein Profil aufweist an dessen Enden weitere Achsteile befestigt sind, die jeweils mindestens ein Anhängerrad (5) führen, einem Drehgestell (8) mit einer Zuggabel (9) und einem von einem Ober- und einem Unterring (10, 11) gebildeten Lenkkranz (16), **dadurch gekennzeichnet, dass** die Starrachse (3) und die Anhängevorrichtung (17) unverbrückt jeweils unmittelbar an der Tankkonstruktion (18) befestigt sind oder dass die Starrachse (3) und die drehbare Achse (2) unverbrückt jeweils unmittelbar an der Tankkonstruktion (18) befestigt sind.

2. Tankwagen-Anhänger (1) für Flüssigkeiten nach Anspruch 1, erste Alternative, **dadurch gekennzeichnet, dass** der Zapfen (17) an einer zweiteiligen scheibenförmigen Aufnahme (19) ausgebildet ist, dass der zweite Teil als Gegenflansch im Inneren der Tankkonstruktion (18) vorgesehen ist, dass der zumindest eine Achsschlitten (6, 7) ein Profil aufweist, an dessen Fläche die Tankkonstruktion (18) befestigt ist, und dass im Inneren der Tankkonstruktion (18) ebenfalls ein als Profil ausgebildeter Gegenflansch (13, 14) vorgesehen ist.

3. Tankwagen-Anhänger (1) für Flüssigkeiten nach Anspruch 1 zweite Alternative, **dadurch gekennzeichnet, dass** die Starrachse (3) zwei Achsschlitten (6, 7) aufweist, an welchen je ein L-Profil ausgebildet ist das an der Außenseite der Tankkonstruktion befestigt ist, dass im Inneren der Tankkonstruktion (18) ebenfalls zwei als L-Profil ausgebildete Gegenflansche (13, 14) vorgesehen sind, dass der Oberring (10) der drehbaren Achse (2) an der Außenseite der Tankkonstruktion (18) befestigt ist, und dass im Inneren der Tankkonstruktion (18) ein ringförmig ausgebildeter Gegenflansch (15) vorgesehen ist

4. Tankwagen-Anhänger (1) für Flüssigkeiten nach Anspruch 1 bis 3, **dadurch gekennzeichnet, dass** die Tankkonstruktion (18) aus CFK (kohlenstofffaserverstärktem Kunststoff), aus GFK (glasfaserverstärktem Kunststoff) oder einer Mischung der vorstehend genannten Komponenten besteht.

5. Tankwagen-Anhänger (1) für Flüssigkeiten nach einem der vorstehend genannten Ansprüche, **dadurch gekennzeichnet, dass** der Achsträger (4) biegesteif und torsionsweich ausgeführt ist.

6. Tankwagen-Anhänger (1) für Flüssigkeiten nach einem der vorstehend genannten Ansprüche, **dadurch gekennzeichnet, dass** die als L-Profil ausgebildeten Gegenflansche (13, 14) und der Gegenflansch (15) im Tankinneren ein- oder anlaminiert sind.

7. Tankwagen-Anhänger (1) für Flüssigkeiten nach einem der vorstehend genannten Ansprüche, **dadurch gekennzeichnet, dass** die abschnittsweise verstärkten Bereichen durch an- oder einlaminieren vorgefertigter Faser-Kunststoff-Verbundwerkstoffteile oder anderer geeigneter Materialteile gebildet sind.

8. Tankwagen-Anhänger (1) für Flüssigkeiten nach einem der vorstehend genannten Ansprüche, **dadurch gekennzeichnet, dass** die abschnittsweise verstärkten Bereiche längs zur Tankkonstruktionslängsachse im Bereich der Unterschale (12) ausgebildet sind.

9. Tankwagen-Anhänger (1) für Flüssigkeiten nach einem der vorstehend genannten Ansprüche, **dadurch gekennzeichnet, dass** im Bereich der abschnittsweise verstärkten Bereiche die Achsen (2, 3) bzw. die Achse (3) und die Anhängevorrichtung (17) befestigt sind.

10. Tankwagen-Anhänger (1) für Flüssigkeiten nach einem der vorstehend genannten Ansprüche, **dadurch gekennzeichnet, dass** die Tankkonstruktion (18) als Güllefass ausgebildet ist.

## Claims

1. Tanker trailer (1) for liquids, comprising a self-supporting tank structure (18) made of fibre-plastic composite materials with regions reinforced in sections, at least one rigid axle (3) with at least one axle carrier (4) which runs substantially transversely with respect to the longitudinal axis of the trailer and has a profile, and to the ends of which further axle parts are fastened which each guide at least one trailer wheel (5), and with at least one axle carriage (6, 7) running substantially longitudinally with respect to the longitudinal axis of the trailer, at least one coupling device, in particular a kingpin (17), or a further axle (2) which is rotatable, with at least one axle carrier which runs substantially transversely with respect to the longitudinal axis of the trailer and has a profile, to the ends of which further axle parts are fastened which each guide at least one trailer wheel (5), with a bogie (8) having a forked drawbar (9) and a turntable (16) formed by an upper ring and a lower ring (10, 11), **characterized in that** the rigid axle (3) and the coupling device (17) are each fastened directly to the tank structure (18) without being bridged, or **in that** the rigid axle (3) and the rotatable axle (2) are each fastened directly to the tank structure (18) without being bridged.

2. Tanker trailer (1) for liquids according to Claim 1, first alternative, **characterized in that** the pin (17) is formed on a two-part disc-shaped receptacle (19), **in that** the second part is provided as a counter flange in the interior of the tank structure (18), **in that** the at least one axle carriage (6, 7) has a profile, to the surface of which the tank structure (18) is fastened, and **in that** a counter flange (13, 14) designed as a profile is likewise provided in the interior of the tank structure (18).

3. Tanker trailer (1) for liquids according to Claim 1, second alternative, **characterized in that** the rigid axle (3) has two axle carriages (6, 7), on each of which an L profile is formed, which is fastened to the outer side of the tank structure, **in that** two counter flanges (13, 14) designed as an L profile are likewise provided in the interior of the tank structure (18), **in that** the upper ring (10) of the rotatable axle (2) is fastened to the outer side of the tank structure (18), and **in that** a counter flange (15) of annular design is provided in the interior of the tank structure (18).

4. Tanker trailer (1) for liquids according to Claims 1 to 3, **characterized in that** the tank structure (18) is composed of CFRP (Carbon-Fibre-Reinforced Plastic), of GFRP (Glass-Fibre-Reinforced Plastic) or a mixture of the abovementioned components.

5. Tanker trailer (1) for liquids according to one of the abovementioned claims, **characterized in that** the axle carrier (4) is of flexurally rigid and torsionally soft design.

6. Tanker trailer (1) for liquids according to one of the abovementioned claims, **characterized in that** the counter flanges (13, 14) designed as an L profile and the counter flange (15) in the tank interior are laminated in or on.

7. Tanker trailer (1) for liquids according to one of the abovementioned claims, **characterized in that** the regions which are reinforced in sections are formed by premanufactured fibre-plastic composite material parts or other suitable material parts being laminated on or in.

8. Tanker trailer (1) for liquids according to one of the abovementioned claims, **characterized in that** the regions which are reinforced in sections are formed longitudinally with respect to the longitudinal axis of the tank structure in the region of the lower shell (12).

9. Tanker trailer (1) for liquids according to one of the abovementioned claims, **characterized in that** the axles (2, 3) or the axle (3) and the coupling device (17) are fastened in the region of the regions which are reinforced in sections.

10. Tanker trailer (1) for liquids according to one of the abovementioned claims, **characterized in that** the tank structure (18) is designed as a liquid manure drum.

## Revendications

1. Remorque de camion-citerne (1) pour liquides, comprenant une construction de citerne autoportante (18) constituée de matériaux composites en plastique renforcé par des fibres avec des régions renforcées par sections, au moins un essieu rigide (3) avec au moins un support d'essieu (4) s'étendant essentiellement transversalement à l'axe longitudinal de la remorque, qui présente un profilé et aux extrémités duquel sont fixées des parties d'essieu supplémentaires qui guident à chaque fois au moins une roue de remorque (5), et avec au moins un chariot d'essieu (6, 7) s'étendant essentiellement longitudinalement par rapport à l'axe longitudinal de la remorque, au moins un dispositif de remorque, en particulier une fusée (17), ou un essieu supplémentaire (2) qui peut tourner, avec au moins un support d'essieu s'étendant essentiellement transversalement à l'axe longitudinal de la remorque; qui présente un profilé au niveau des extrémités duquel sont fixées des parties d'essieu supplémentaires qui guident à chaque fois au moins une roue de remorque (5), un bogie (8) avec une fourche de traction (9) et une couronne de direction (16) formée par une couronne supérieure et une couronne inférieure (10, 11), **caractérisée en ce que** l'essieu rigide (3) et le dispositif de remorque (17) sont fixés sans pontage à chaque fois directement à la construction de citerne (18) ou **en ce que** l'essieu rigide (3) et l'essieu rotatif (2) sont fixés sans pontage à chaque fois directement à la construction de citerne (18).

2. Remorque de camion-citerne (1) pour des liquides selon la revendication 1, première variante, **caractérisée en ce que** la fusée (17) est réalisée au niveau d'un logement en forme de disque en deux parties (19), **en ce que** la deuxième partie est prévue sous forme de bride conjuguée à l'intérieur de la construction de citerne (18), **en ce que** l'au moins un chariot d'essieu (6, 7) présente un profilé au niveau de la surface duquel la construction de citerne (18) est fixée, et **en ce qu'**à l'intérieur de la construction de citerne (18) est également prévue une bride conjuguée (13, 14) réalisée sous forme de profilé.

3. Remorque de camion-citerne (1) pour des liquides selon la revendication 1, deuxième variante, **caractérisée en ce que** l'essieu rigide (3) présente deux chariots d'essieu (6, 7) au niveau desquels est à chaque fois réalisé un profilé en forme de L qui est fixé au niveau du côté extérieur de la construction de citerne, **en ce qu'**à l'intérieur de la construction de citerne (18) sont également prévues deux brides conjuguées (13, 14) réalisées sous forme de profilé en forme de L, **en ce que** la couronne supérieure (10) de l'essieu rotatif (2) est fixée au niveau du côté extérieur de la construction de citerne (18) et **en ce qu'**à l'intérieur de la construction de citerne (18) est prévue une bride conjuguée (15) réalisée sous forme annulaire.

4. Remorque de camion-citerne (1) pour des liquides selon les revendications 1 à 3, **caractérisée en ce que** la construction de citerne (18) se compose de CFK (plastique renforcé par des fibres de carbone), de GFK (plastique renforcé par des fibres de verre) ou d'un mélange des composants susmentionnés.

5. Remorque de camion-citerne (1) pour des liquides selon l'une quelconque des revendications précédentes, **caractérisée en ce que** le support d'essieu (4) est réalisé sous forme rigide en flexion et souple en torsion.

6. Remorque de camion-citerne (1) pour des liquides selon l'une quelconque des revendications précédentes, **caractérisée en ce que** les brides conjuguées (13, 14) réalisées sous forme de profilés en forme de L et la bride conjuguée (15) sont incorporées ou appliquées par laminage à l'intérieur de la citerne.

7. Remorque de camion-citerne (1) pour des liquides selon l'une quelconque des revendications précédentes, **caractérisée en ce que** les régions renforcées par sections sont formées par des pièces en matériau composite en plastique renforcé par des fibres préfabriquées appliquées ou incorporées par laminage ou par d'autres pièces en matériaux appropriées.

8. Remorque de camion-citerne (1) pour des liquides selon l'une quelconque des revendications précédentes, **caractérisée en ce que** les régions renforcées par sections sont réalisées le long de l'axe longitudinal de la construction de citerne dans la région de la coque inférieure (12).

9. Remorque de camion-citerne (1) pour des liquides selon l'une quelconque des revendications précédentes, **caractérisée en ce que** dans la région des régions renforcées par sections sont fixés les essieux (2, 3) ou l'essieu (3) et le dispositif de remorque (17).

10. Remorque de camion-citerne (1) pour des liquides selon l'une quelconque des revendications précédentes, **caractérisée en ce que** la construction de citerne (18) est réalisée sous forme de citerne à lisier.
